(19)

Europäisches Patentamt
European Patent Office
Office européen des brevets

(11) **EP 4 492 127 A1**

(12) **EUROPEAN PATENT APPLICATION**
published in accordance with Art. 153(4) EPC

(43) Date of publication:
**15.01.2025 Bulletin 2025/03**

(21) Application number: **23766506.2**

(22) Date of filing: **17.02.2023**

(51) International Patent Classification (IPC):
**G02B 30/56** (2020.01)    **G02B 5/00** (2006.01)
**G02B 5/04** (2006.01)    **H04N 13/302** (2018.01)

(52) Cooperative Patent Classification (CPC):
**G02B 5/00; G02B 5/04; G02B 30/56; H04N 13/302**

(86) International application number:
**PCT/JP2023/005799**

(87) International publication number:
**WO 2023/171327 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.03.2022 JP 2022034416**

(71) Applicant: **Toppan Holdings Inc.
Tokyo 110-0016 (JP)**

(72) Inventor: **DAIKU, Yasuhiro
Tokyo 110-0016 (JP)**

(74) Representative: **TBK
Bavariaring 4-6
80336 München (DE)**

(54) **AERIAL DISPLAY DEVICE**

(57)    An aerial display apparatus includes: a display device (20) configured to display an image; an optical device (40) arranged to receive light from the display device (20) and configured to reflect light from the display device (20) to a side opposite to the display device (20) to form an aerial image in an aerial space; a polarizing device (50) arranged to receive light from the optical device (40) and configured to transmit linearly polarized light; and a housing (60) formed to surround the optical device (40) and configured to fix the display device (20) and the optical device (40) with a space therebetween. A polarization axis of the polarizing device (50) is parallel to a polarization axis of the display device (20).

FIG. 1

EP 4 492 127 A1

## Description

FIELD

The present invention relates to an aerial display apparatus.

BACKGROUND

Aerial display apparatuses capable of displaying still images, moving images, and the like as aerial images have been developed, and are expected to serve as new human-machine interfaces. For instance, an aerial display apparatus includes a dihedral corner reflector array, in which dihedral corner reflectors are arranged into an array, and reflects light emitted from the display surface of a display device to thereby form a real image in the air. With the display method adopting a dihedral corner reflector array, a real image (aerial image) can be displayed at a plane-symmetric position without an aberration.

Patent Document 1 discloses an optical device using transparent quadrangular prisms that protrude from the surface of a flat transparent plate as dihedral corner reflectors, in which the quadrangular prisms are arranged into an array on a plane. Patent Document 2 discloses an optical device in which first and second light control panels, each of which is formed by vertically aligning a plurality of planar light reflecting portions inside a flat transparent plate, are arranged in such a manner that the planar light reflecting portions of the two panels are orthogonal to each other. In the optical devices disclosed in Patent Documents 1 and 2, the light emitted from the display device is reflected twice upon the orthogonally arranged reflection surfaces to produce an aerial image.

On display apparatuses adopting the optical device of Patent Document 1 or 2, one can recognize an aerial image through an observation from an oblique direction of the optical device. It is difficult, however, to clearly recognize an aerial image when observed from the direction of the normal to the optical device.

CITATION LIST

PATENT LITERATURE

Patent Document 1: Jpn. Pat. Appln. KOKAI Publication No. 2011-191404
Patent Document 2: Jpn. Pat. Appln. KOKAI Publication No. 2011-175297

SUMMARY

TECHNICAL PROBLEM

The present invention is to provide an aerial display apparatus capable of improving a display quality.

SOLUTION TO PROBLEM

A first aspect of the present invention provides an aerial display apparatus comprising:

a display device configured to display an image;
an optical device arranged to receive light from the display device and configured to reflect light from the display device to a side opposite to the display device to form an aerial image in an aerial space;
a polarizing device arranged to receive light from the optical device and configured to transmit linearly polarized light; and
a housing formed to surround the optical device and configured to fix the display device and the optical device with a space therebetween,
a polarization axis of the polarizing device being parallel to a polarization axis of the display device.

A second aspect of the present invention provides the aerial display apparatus according to the first aspect, wherein

the housing includes a bottom plate having an opening, and
the display device is arranged such that the light from the display device passes through the opening.

A third aspect of the present invention provides the aerial display apparatus according to the first aspect, wherein

the optical device includes a planar base member, and a plurality of optical elements provided below the base member, each extending in a first direction and aligned in a second direction orthogonal to the first direction, and each of the optical elements has an incident surface and a reflection surface which are inclined with respect to a normal direction of the base member and are in contact with each other.

A fourth aspect of the present invention provides the aerial display apparatus according to the first aspect, wherein
the display device, the optical device and the polarizing device are arranged in parallel to each other.
A fifth aspect of the present invention provides the aerial display apparatus according to the first aspect, further comprising:
an alignment control device arranged between the display device and the optical device and transmitting part of the light from the display device.
A sixth aspect of the present invention provides the aerial display apparatus according to the fifth aspect, wherein

the alignment control device includes a plurality of transparent members and a plurality of light shielding members alternately arranged, and
the light shielding members are inclined with respect to a normal direction of the alignment control device.

A seventh aspect of the present invention provides the aerial display apparatus according to the fifth, wherein the display device and the alignment control device are arranged in parallel to each other.
An eighth aspect of the present invention provides the aerial display apparatus according to the first aspect, further comprising:

a lighting device configured to produce light,
wherein the display device is arranged to receive light from the lighting device and is configured by a liquid crystal display device.

ADVANTAGEOUS EFFECTS OF INVENTION

According to the present invention, an aerial display apparatus capable of improving a display quality can be provided.

BRIEF DESCRIPTION OF THE DRAWINGS

FIG. 1 is an exploded view of an aerial display apparatus according to the embodiment of the present invention.
FIG. 2 is a plan view of the aerial display apparatus shown in FIG. 1.
FIG. 3 is a cross-sectional view of the aerial display apparatus taken along line A-A' of FIG. 2.
FIG. 4 is a side view of a main part of the aerial display apparatus.
FIG. 5 is a side view of a display device shown in FIG. 1.
FIG. 6 is a cross-sectional view of a housing extracted.
FIG. 7A is a plan view of an alignment control device shown in FIG. 1.
FIG. 7B is a cross-sectional view of the alignment control device taken along line B-B' of FIG. 7A.
FIG. 8 is a perspective view of an optical device shown in FIG. 1.
FIG. 9 is a block diagram of the aerial display apparatus.
FIG. 10 is a perspective view illustrating the state of light reflection on the optical device.
FIG. 11 is an XZ-plane side view illustrating the state of light reflection on the optical device.
FIG. 12 is a YZ-plane side view illustrating the state of light reflection on the optical device.
FIG. 13 is a diagram illustrating angular conditions of an incident surface and a reflection surface of the optical device.
FIG. 14 is a schematic view illustrating behavior of external light.
FIG. 15 is a schematic view illustrating behavior of display light.

DETAILED DESCRIPTION

Embodiments will be described below with reference to the drawings. These drawings are schematically or conceptually illustrated, and the dimensions, ratios, and the like in each drawing may not always be the same as actual dimensions and ratios. Further, among the drawings illustrating the same portion, the dimensional relationships or ratios may differ from each other. In particular, the embodiments described below exemplify a device and a method that embody the technical idea of the present invention, and therefore the technical idea of the present invention should not be identified by the shape, configuration, arrangement, etc. of the structural components. In the description below, the same reference numerals are given to elements having the same functions and configurations, and redundant explanations may be omitted.

(1) Configuration of Aerial Display Apparatus 1

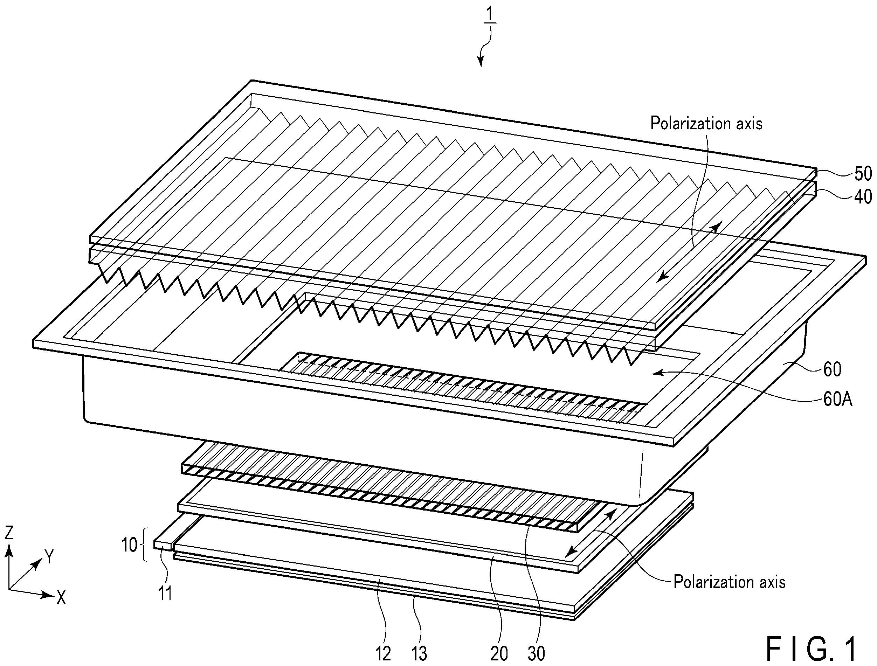

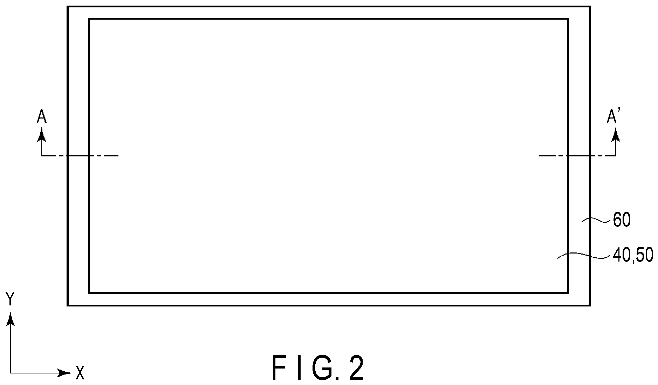

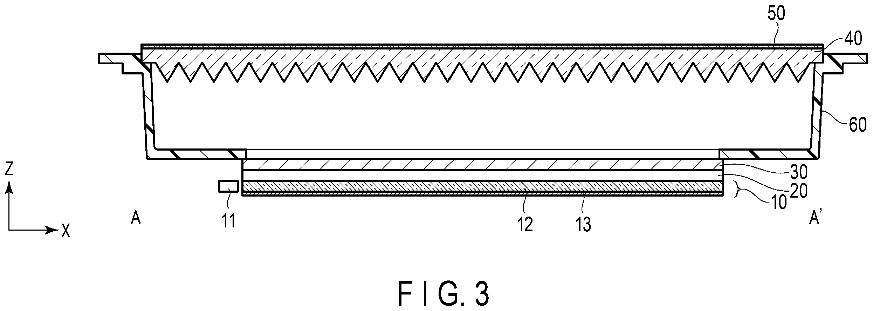

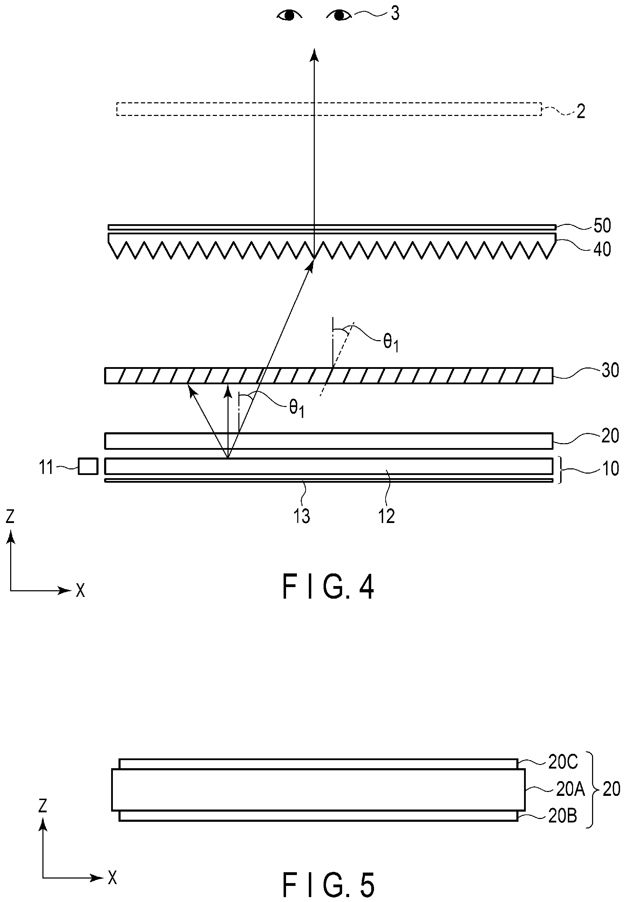

FIG. 1 is an exploded view of an aerial display apparatus 1 according to the embodiment of the present invention. In FIG. 1, the X direction represents a direction along one side of the aerial display apparatus 1, the Y direction represents a direction orthogonal to the X direction on a horizontal plane, and the Z direction represents a direction orthogonal to the XY plane (also referred to as a normal direction). FIG. 2 is a plan view of the aerial display apparatus 1 shown in FIG. 1. FIG. 3 is a cross-sectional view of the aerial display apparatus 1 taken along line A-A' of FIG. 2. FIG. 4 is a side view of a main part of the aerial display apparatus 1.

The aerial display apparatus 1 denotes an apparatus that displays images (including moving images). The aerial display apparatus 1 displays an aerial image in an aerial space above the light emitting surface of the apparatus itself. The light emitting surface of the aerial display apparatus 1 denotes a surface of a component disposed in the uppermost layer of multiple components that constitute the aerial display apparatus 1. An aerial image denotes a real image formed in the aerial space.

The aerial display apparatus 1 includes a lighting device (also referred to as a backlight) 10, a display device 20, an alignment control device 30, an optical device 40, a polarizing device 50, and a housing 60. The lighting device 10, the display device 20, the alignment control device 30, the optical device 40, and the polarizing device 50 are arranged in this order along the Z direction and are arranged parallel to each other. The lighting device 10, the display device 20, and the alignment control device 30 are fixed at desired positions by fixing members (not shown) with desired spaces therebetween.

The lighting device 10 produces illumination light and outputs the illumination light toward the display device 20. The lighting device 10 includes a light source unit 11, a light guide plate 12, and a reflective sheet 13. The lighting device 10 may be a sidelight-type lighting device. The lighting device 10 forms a surface light source. The lighting device 10 may be configured in such a manner that the light intensity in an oblique direction at the angle $\theta_1$ described later reaches its peak.

The light source unit 11 is disposed so as to face the side surface of the light guide plate 12. The light source unit 11 produces light toward the side surface of the light guide plate 12. The light source unit 11 includes a plurality of light emitting elements formed of, for example, a white light emitting diode (LED). The light guide plate 12 guides the illumination light from the light source unit 11 and outputs the illumination light from the upper surface thereof. The reflective sheet 13 reflects the illumination light output from the bottom surface of the light guide plate 12 toward the light guide plate 12 again. The lighting device 10 may include an optical device (including a prism sheet and a diffusion sheet) for improving optical characteristics on the upper surface of the light guide plate 12.

The display device 20 is a transmissive display device. The display device 20 is configured by, for example, a liquid crystal display device. The driving mode of the display device 20 is not particularly limited, and a twisted nematic (TN) mode, a vertical alignment (VA) mode, a homogeneous mode, or the like, can be used. The display device 20 receives the illumination light output from the lighting device 10. The display device 20 transmits the illumination light from the lighting device 10 and performs optical modulation. The display device 20 thereby displays a desired image on its display surface.

FIG. 5 is a side view of the display device 20 shown in FIG. 1. The display device 20 includes a liquid crystal panel (also referred to as a display panel) 20A, a polarizing plate 20B, and a polarizing plate 20C. The liquid crystal panel 20A includes two transparent substrates, a liquid crystal layer sandwiched between the two transparent substrates, and switching elements corresponding in number to pixels. The polarizing plate 20B is provided on the lighting device 10 side of the liquid crystal panel 20A, and the polarizing plate 20C is provided on the alignment control device 30 side of the liquid crystal panel 20A.

The polarizing plates 20B and 20C are each a linear polarizer and have a polarization axis. The polarization axis has the same meaning as a transmission axis. Of light having planes of vibration in random directions, the polarizing plates 20B and 20C each transmit linearly polarized light (a linearly polarized light component) having a plane of vibration parallel to the polarization axis. The polarizing plates 20B and 20C are arranged, for example, such that their polarization axes are orthogonal to each other, that is, arranged in a crossed-Nicol state. The relationship between the polarization axes of the polarizing plates 20B and 20C is appropriately set according to the driving mode and the display mode (either normally black or normally white).

The display device 20 outputs display light composed of linearly polarized light parallel to the polarization axis of the uppermost polarizing plate 20C. In the present embodiment, the polarization axis of the uppermost polarizing plate 20C is referred to as a polarization axis of the display device 20. As shown in FIG. 1, the polarization axis of the display device 20 is set in the Y direction. The display device 20 may include an optical device for improving optical characteristics on the upper surface of the polarizing plate 20C.

The alignment control device 30 has a function of reducing unnecessary light. The unnecessary light indicates light components not contributing to production of an aerial image, and includes light components transmitted through the optical device 40 in the normal direction. The alignment control device 30 is configured to transmit light components within a predetermined angular range defined around an oblique direction of an angle $\theta_1$ with respect to the normal direction and to shield light components other than the angular range. The detailed configuration of the alignment control device 30 will be described later.

The optical device 40 reflects light incident from the bottom surface side to the upper surface side. The optical device 40 may also reflect the light obliquely incident from the bottom surface side, for example, in the front direction (normal direction). The detailed configuration of the optical device 40 will be described later. The optical device 40 forms an aerial image 2 in the aerial space. The aerial image 2 is a two-dimensional image parallel to the device surface of the optical device 40. The device surface denotes a virtual plane on which the optical device 40 extends in an in-plane direction. The device surface has the same meaning as an in-plane direction. The same applies to the device surfaces of other devices. A viewer 3 in front of the optical device 40 can visually recognize the aerial image 2.

The polarizing device 50 is a linear polarizer and has a polarization axis. Of light having planes of vibration in random directions, the polarizing device 50 transmits linearly polarized light (a linearly polarized light component) having a plane of vibration parallel to the polarization axis. The polarization axis of the polarizing device 50 is set in the Y direction. That is, the polarization axis of the polarizing device 50 is set to be parallel to the polarization axis of the display device 20. The polarizing device 50 may be adhered to the upper surface of the optical device 40 by using a transparent adhesive, or may be arranged with a desired space from the optical device 40. In a case where the optical device 40 and the polarizing device 50 are arranged with a desired space therebetween, the polarizing device 50 is fixed by a fixing member (not shown).

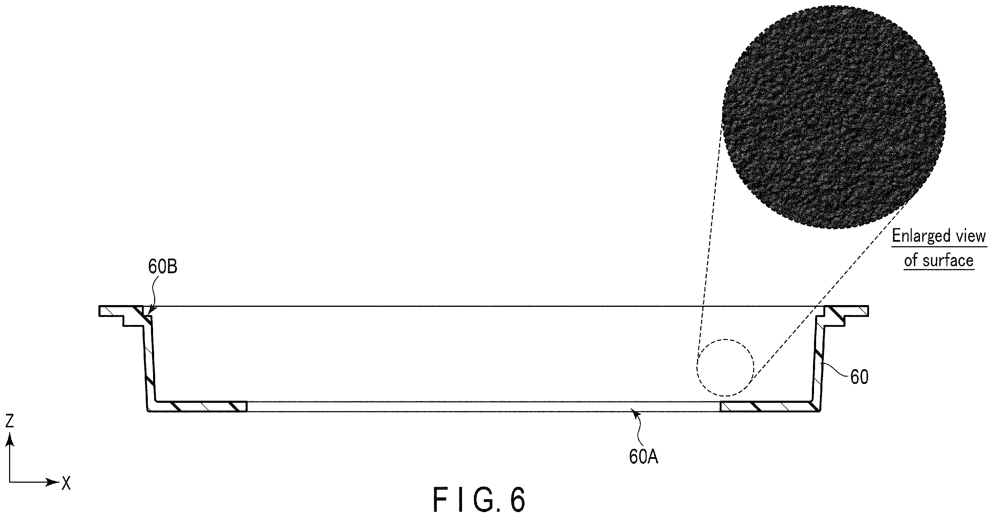

FIG. 6 is a cross-sectional view of the housing 60 extracted. The housing 60 has a rectangular box shape. The housing 60 is configured by one bottom plate and four side plates. In the housing 60, the bottom plate is provided with a quadrangular opening 60A. The opening 60A is for allowing light emitted from the alignment control device 30 to pass through. A laminated structure configured by the lighting device 10, the display device 20, and the alignment control device 30 is fixed to the bottom plate of the housing 60 by using a fixing member (not shown). The alignment control device 30 is exposed from the opening 60A.

The housing 60 is formed to surround the optical device 40. The housing 60 has, at its upper portion, a stepped portion 60B for fixing the optical device 40. The optical device 40 is fixed to the housing 60 so as to be placed on the stepped portion 60B of the housing 60. The housing 60 has a function of holding the alignment control device 30 and the optical device 40 with a desired space therebetween.

The housing 60 is desirably made of a material capable of reducing reflection of light. The housing 60 is made of, for example, a black resin. FIG. 6 shows an enlarged view of the inner surface of the housing 60. For example, the inner surface of the housing 60 is subjected to a roughening treatment. The roughened surface can reduce reflection of light.

(1-1) Configuration of Alignment Control Device 30

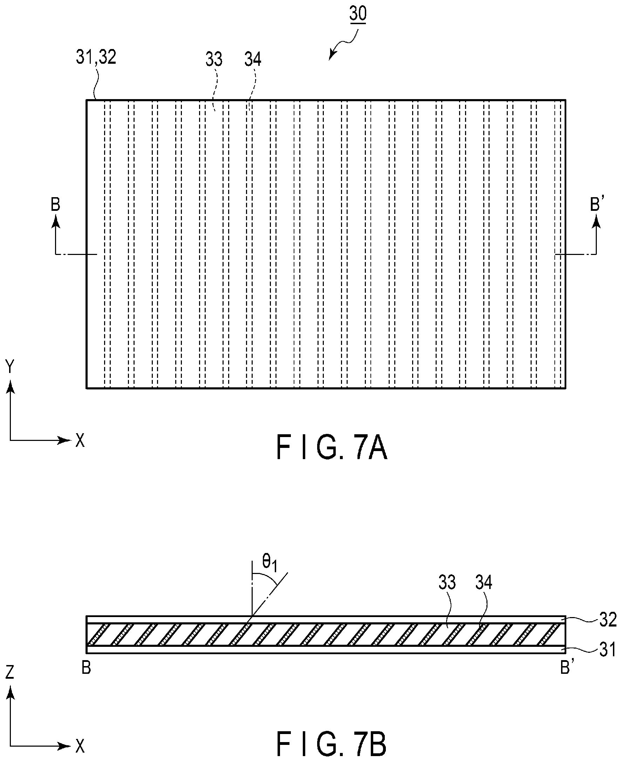

FIG. 7A is a plan view of the alignment control device 30 shown in FIG. 1. FIG. 7B is a cross-sectional view of the alignment control device 30 taken along line B-B' of FIG. 7A.

The base member 31 is formed to be a quadrangular plane. The base member 31 transmits light.

A plurality of transparent members 33 are provided on the base member 31 and aligned in the X direction, each extending in the Y direction. A plurality of light shielding members 34 are also provided on the base member 31 and aligned in the X direction, each extending in the Y direction. The transparent members 33 and the light shielding members 34 are alternately arranged in such a manner that adjacent ones are in contact with each other.

The base member 32 is provided on the transparent members 33 and the light shielding members 34. The base member 32 is formed to be a quadrangular plane. The base member 32 transmits light.

The transparent members 33 respectively extend on the XZ plane in an oblique direction at an angle $\theta_1$ with respect to the normal direction of the base member 31. Each of the transparent members 33 has a parallelogram shape with its side surface inclined at the angle $\theta_1$ on the XZ plane. The transparent member 33 transmits light.

The light shielding members 34 respectively extend on the XZ plane in an oblique direction at an angle $\theta_1$ with respect to the normal direction of the base member 31. Each of the light shielding members 34 has a parallelogram shape with its side surface inclined at the angle $\theta_1$ on the XZ plane. The light shielding member 34 shields light.

Any two adjacent light shielding members 34 are disposed in such a manner that the end portions thereof slightly overlap each other in the Z direction.

The base members 31 and 32 and the transparent members 33 are formed of a transparent resin. The transparent resin includes an acrylic resin. The light shielding members 34 are formed of, for example, a resin mixed with a black colorant or pigment.

The alignment control device 30 may be configured without one or both of the base members 31 and 32. The function of the alignment control device 30 can be realized at least with the transparent members 33 and the light shielding members 34 alternately arranged.

The alignment control device 30 configured as described above transmits the display light in such a manner that the light intensity in an oblique direction at the angle $\theta_1$ with respect to the normal direction reaches its peak. The angle $\theta_1$ is set to be, for example, 10 degrees or more and 60 degrees or less. The alignment control device 30 is configured, for example, to shield light components other than the range of 30°$\pm$30° with respect to the normal direction. It is more preferable that the alignment control device 30 be configured to shield light components other than the range of 30° $\pm$ 20° with respect to the normal direction.

As a modification, the alignment control device 30 may be disposed between the lighting device 10 and the display device 20. Alternatively, the aerial display apparatus 1 may be configured without an alignment control device 30.

(1-2) Configuration of Optical Device 40

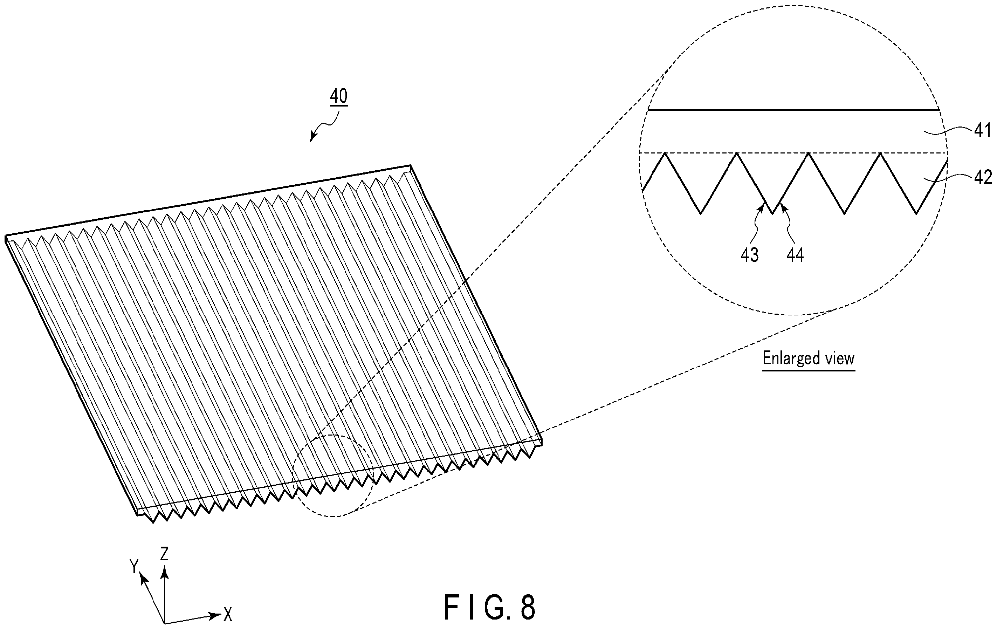

FIG. 8 is a perspective view of the optical device 40 shown in FIG. 1. FIG. 8 also shows a side view of a part of the optical device 40 in an enlarged manner.

The optical device 40 includes a base member 41 and a plurality of optical elements 42. The base member 41 is formed to be planar on the XY plane and has a rectangular parallelepiped shape.

A plurality of optical elements 42 are provided on the bottom surface of the base member 41. Each of the optical elements 42 is formed to be a triangular prism. The optical elements 42 are disposed such that the three side surfaces of each triangular prism extend parallel to the XY plane with one of the side surfaces being in contact with the base member 41. The optical elements 42 each extend in the Y direction and are aligned in the X direction. In other words, the optical elements 42 form a sawtooth shape.

Each of the optical elements 42 has an incident surface 43 and a reflection surface 44. When viewed from the Y direction, the left side surface is the incident surface 43 and the right side surface is the reflection surface 44. Upon the incident surface 43, light from the display device 20 is incident. Upon the reflection surface 44, the light externally incident on the incident surface 43 is reflected in the interior of the optical element 42. The incident surface 43 and the reflection surface 44 have an angle $\theta_p$.

The optical elements 42 may be formed integrally with the base member 41, using the same transparent material as the base member 41. The base member 41 and the optical elements 42 may be formed separately, and the optical elements 42 may be adhered to the base member 41, using a transparent adhesive. Examples of the transparent material for the base member 41 and the optical elements 42 include an acrylic resin or glass.

The optical device 40 internally reflects incident light and thereby forms a real image in the aerial space. The optical device 40 forms a real image at a position in front of its device surface.

(1-3) Block Configuration of Aerial Display Apparatus 1

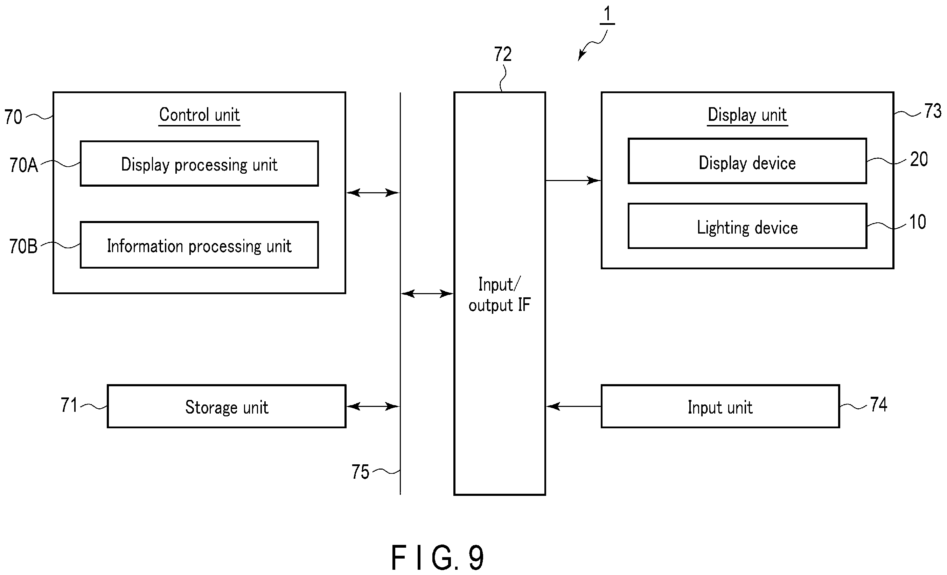

FIG. 9 is a block diagram of the aerial display apparatus 1. The aerial display apparatus 1 includes a control unit 70, a storage unit 71, an input/output interface (input/output IF) 72, a display unit 73, and an input unit 74. The control unit 70, the storage unit 71, and the input/output interface 72 are connected to each other via a bus 75.

The input/output interface 72 is connected to the display unit 73 and the input unit 74. The input/output interface 72 performs interface processing corresponding to a predetermined standard respectively on the display unit 73 and the input unit 74.

The display unit 73 includes the lighting device 10 and the display device 20. The display unit 73 displays an image.

The control unit 70 is configured by one or more processors such as a central processing unit (CPU) or a micro processing unit (MPU). The control unit 70 realizes various functions by executing programs stored in the storage unit 71. The control unit 70 includes a display processing unit 70A and an information processing unit 70B.

The display processing unit 70A controls the operation of the display unit 73 (in particular, the lighting device 10 and the display device 20). The display processing unit 70A controls ON and OFF of the lighting device 10. The display processing unit 70A transmits an image signal to the display device 20 to cause the display device 20 to display an image.

The information processing unit 70B produces an image to be displayed by the aerial display apparatus 1. The information processing unit 70B can use image data stored in the storage unit 71. The information processing unit 70B may acquire image data from the outside by using a communication function (not shown).

The storage unit 71 includes a nonvolatile storage device such as a read only memory (ROM), a hard disk drive (HDD), and a solid state drive (SSD), and a volatile storage device such as a random access memory (RAM) and a register.

The storage unit 71 stores programs executed by the control unit 70. The storage unit 71 stores various data necessary for control of the control unit 70. The storage unit 71 stores data of an image to be displayed by the aerial display apparatus 1.

The input unit 74 receives information input by the user. The information processing unit 70B can select an image to be displayed on the display unit 73 based on information received by the input unit 74.

(2) Operation of Aerial Display Apparatus 1

Next, the operation of the aerial display apparatus 1 configured as above will be described.

(2-1) Display Operation

The arrows in FIG. 4 represent optical paths. As shown in FIG. 4, the light emitted from the display device 20 is incident on the alignment control device 30. In the light emitted from the display device 20, a light component at the angle $\theta_1$ (including light components in a predetermined angular range defined around the angle $\theta_1$) is transmitted through the alignment control device 30. The light that has been transmitted through the alignment control device 30 enters the optical device 40. The optical device 40 forms an image of the incident light in the aerial space on the side opposite to the alignment control device 30 and displays an aerial image 2 in the aerial space.

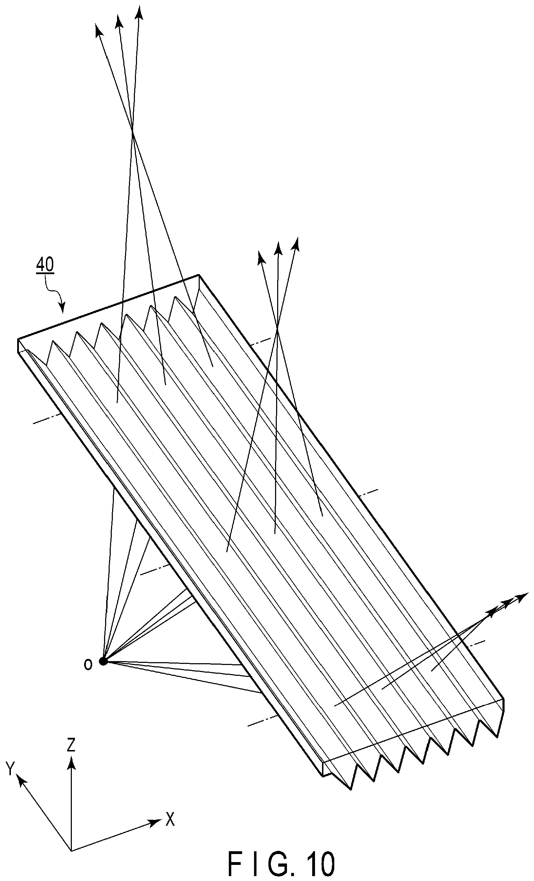

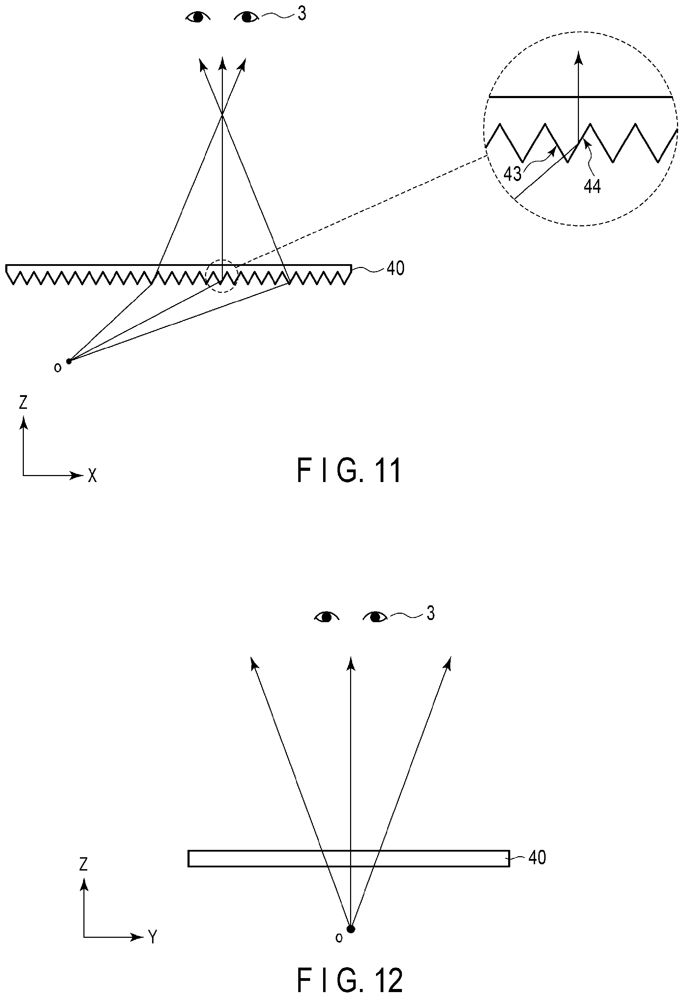

FIG. 10 is a perspective view illustrating the state of light reflection on the optical device 40. FIG. 11 is an XZ-plane side view illustrating the state of light reflection on the optical device 40. In FIG. 11, the optical device 40 is viewed with both eyes (i.e., a line connecting both eyes) of the viewer 3 being parallel to the X direction. FIG. 12 is a YZ-plane side view illustrating the state of light reflection on the optical device 40. In FIG. 12, the optical device 40 is viewed with both eyes of the viewer 3 being parallel to the Y direction.

The light emitted from an arbitrary point "o" on the device surface of the alignment control device 30 enters the incident surfaces 43 of the optical device 40 and reaches the reflection surfaces 44. The light that has reached the reflection surfaces 44 to have an angle larger than the critical angle with respect to the normal direction of the reflection surfaces 44 is totally reflected on the reflection surfaces 44 and is output from the side of the plane of the optical device 40 opposite to the side of the optical elements 42. The critical angle denotes the smallest angle of incidence beyond which total reflection occurs. The critical angle is the angle relative to the normal of the incident surface.

In the XZ plane of FIG. 11, the light emitted from the point "o" is totally reflected on the reflection surfaces 44 of the optical elements 42. The light produces an aerial image in the aerial space.

In the YZ plane of FIG. 12, the light emitted from the point "o" is not reflected on the reflection surfaces 44 of the optical elements 42, performing no image formation in the aerial space. The light therefore does not contribute to the formation of an aerial image.

That is, the condition under which the viewer 3 can recognize an aerial image is when both eyes of the viewer 3 are parallel to the X direction or approximately parallel (e.g., $\pm 10$ degrees with respect to the X direction). Furthermore, in the state of both eyes of the viewer 3 being parallel to or approximately parallel to the X direction, if the viewpoint is shifted along the Y direction, an aerial image can always be recognized.

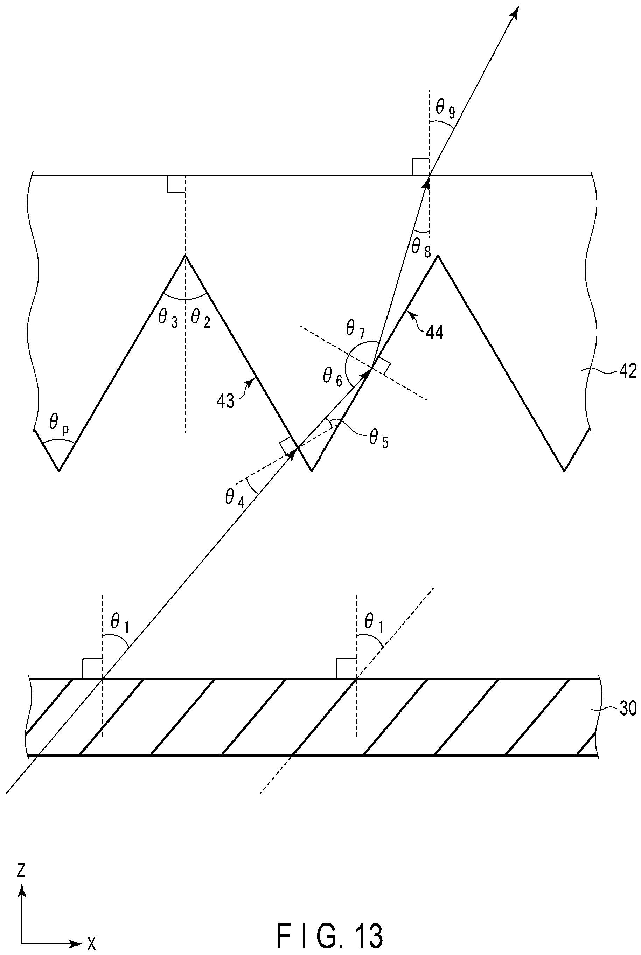

FIG. 13 is a diagram illustrating angular conditions of the incident surface 43 and the reflection surface 44 of the optical device 40.

It is assumed that the angle of the incident surface 43 with respect to the Z direction (the direction perpendicular to the device surface) is $\theta_2$, the angle of the reflection surface 44 with respect to the Z direction is $\theta_3$, and the angle between the incident surface 43 and the reflection surface 44 is $\theta_p$. The angle $\theta_p$ can be expressed by the following equation (1):

$$\theta_p \;=\; \theta_2 \;+\; \theta_3 \qquad (1)$$

The light emitted from the display device 20 at the angle $\theta_1$ is incident on the incident surfaces 43. It is assumed that the refractive index of the material of the optical device 40 is $n_p$, and the refractive index of air is 1. On the incident surface 43, the incident angle is $\theta_4$, and the refraction angle is $\theta_5$. On the reflection surface 44, the incident angle is $\theta_6$, and the refraction angle is $\theta_7$ ($=\theta_6$). On the upper surface of the optical device 40, the incident angle is $\theta_8$, and the refraction angle is $\theta_9$. The refraction angle $\theta_9$ is the output angle. The output angle $\theta_9$ can be expressed by the following equation (2):

$$\theta_9 = \sin^{-1}\left(n_p * \sin\left(\sin^{-1}\left((1/n_p) * \sin(90° - (\theta_1 + \theta_2))\right) + \theta_2 + 2\theta_3 - 90°\right)\right) \qquad (2)$$

The critical angle of the reflection surface 44 can be expressed by the following equation (3):

$$\texttt{critical angle} \;<\; \theta_6 (=\theta_7)$$

$$\text{critical angle} = \sin^{-1}(1/n_p) \quad (3)$$

That is, the incident angle $\theta_6$ on the reflection surface 44 is set to be larger than the critical angle on the reflection surface 44. In other words, the angle $\theta_3$ of the reflection surface 44 is determined such that the incident angle of the light incident on the reflection surface 44 is larger than the critical angle.

The light incident on the incident surface 43 is set so as to cause no total reflection on the incident surface 43. In other words, the angle $\theta_2$ of the incident surface 43 is determined such that the incident angle of the light incident on the incident surface 43 is smaller than the critical angle.

The angle between the device surface of the optical device 40 and the plane of the aerial image 2 and the distance between the device surface of the optical device 40 and the plane of the aerial image 2 can be adjusted by optimally setting the angle $\theta_1$ of the light incident on the optical device 40, the refractive index of the optical device 40, the angle $\theta_2$ of the incident surface 43 of the optical device 40, and the angle $\theta_3$ of the reflection surface 44 of the optical device 40.

(2-2) Detailed Operation Regarding Polarization

Next, a detailed operation of the aerial display apparatus 1 regarding polarization will be described.

External light is incident on the aerial display apparatus 1. The external light is light that enters the aerial display apparatus 1 from the outside of the aerial display apparatus 1. The external light includes sunlight and light from indoor lighting fixtures. The external light has a complicated distribution of the plane of vibration of light and the amplitude, phase, and frequency in the plane in all directions. The external light is unpolarized natural light.

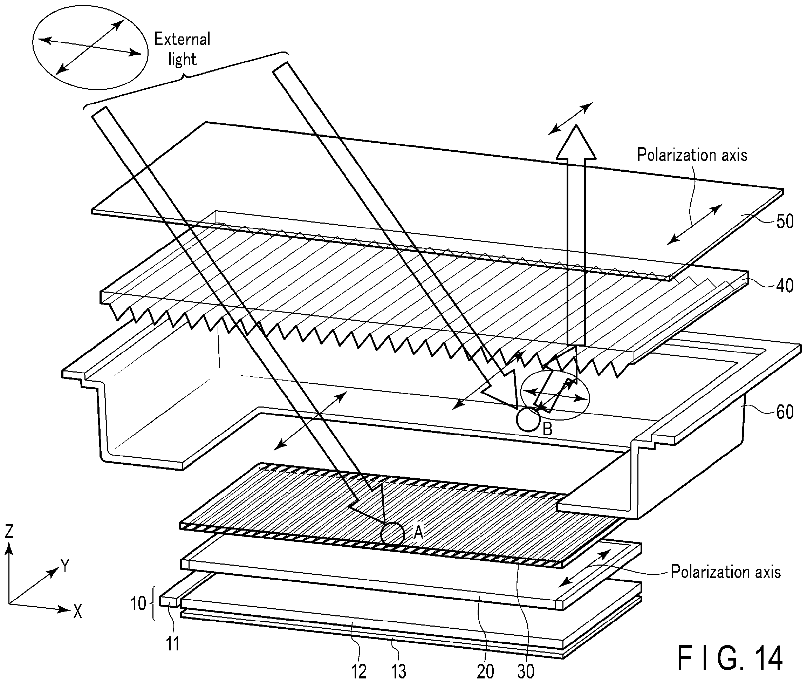

FIG. 14 is a schematic view illustrating the behavior of external light. FIG. 14 is an exploded view of the aerial display apparatus 1. In FIG. 14, one side portion of the aerial display apparatus 1 is omitted for easy understanding of the schematic view. The thick arrows in FIG. 14 represent the states of light. The double-headed arrows in FIG. 14 represent the polarization direction.

Attention is paid to external light that is obliquely incident from the side opposite to the direction in which the light shielding members 34 are inclined with respect to the normal direction of the device surface of the alignment control device 30, that is, external light that is obliquely incident from the upper left of the aerial display apparatus 1. The external light is incident on the polarizing device 50 from above the aerial display apparatus 1. Of the external light incident on the polarizing device 50, a light component (linearly polarized light) parallel to the polarization axis of the polarizing device 50 is transmitted through the polarizing device 50, and the other light components are absorbed by the polarizing device 50. The light component that has been transmitted through the polarizing device 50 reaches the alignment control device 30. The light component that has reached the alignment control device 30 (point "A") is irradiated onto the light shielding members 34 of the alignment control device 30 and absorbed by the light shielding members 34. Therefore, the linearly polarized light that has been transmitted through the polarizing device 50 is not reflected on the alignment control device 30.

The light component that has been transmitted through the polarizing device 50 also reaches the bottom plate of the housing 60. The light component that has reached the bottom plate of the housing 60 (point "B") is diffused and reflected because of the rough surface of the housing 60. Being diffused and reflected means that light is reflected in various directions on a reflection surface. The light component diffused and reflected on the bottom plate of the housing 60 is in a non-polarized state.

The light component diffused and reflected on the bottom plate of the housing 60 is transmitted through the optical device 40, reflected in the Z direction, and incident on the polarizing device 50. Of the light incident on the polarizing device 50, a light component (linearly polarized light) parallel to the polarization axis of the polarizing device 50 is transmitted through the polarizing device 50, and the other light components are absorbed by the polarizing device 50. The light component that has been transmitted through the polarizing device 50 is output from the aerial display apparatus 1 toward the viewer.

Attention is paid to the light component reflected on the bottom plate of the housing 60 among the external light incident on the aerial display apparatus 1. It is assumed that the transmittance of the polarizing device 50 for unpolarized light is 50% and the reflectance of the housing 60 is 10%. In this case, light components output from the aerial display apparatus 1 can be reduced to 2.5% of the external light incident on the aerial display apparatus 1.

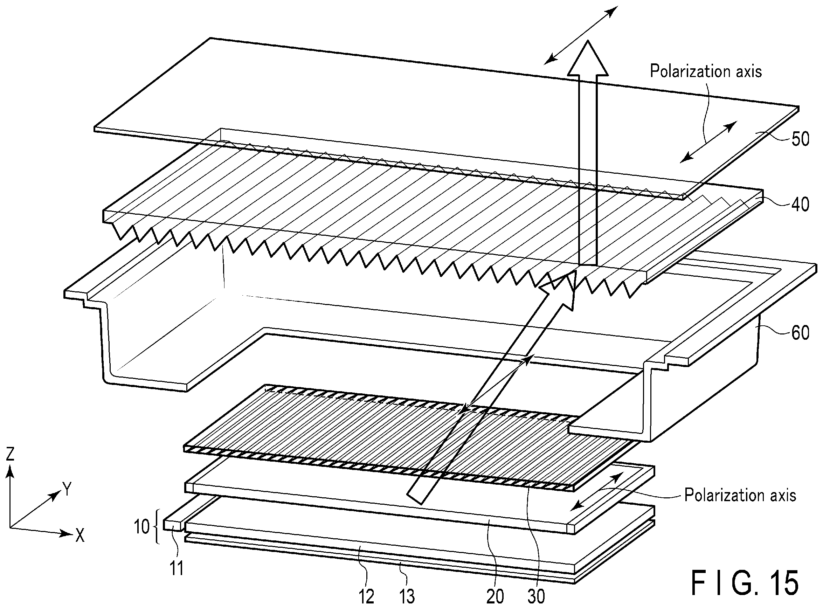

Next, the behavior of the display light emitted from the display device 20 will be described. FIG. 15 is a schematic view illustrating the behavior of display light. The thick arrows in FIG. 15 represent the states of light. The double-headed arrows in FIG. 15 represent the polarization direction.

The display light emitted from the display device 20 is composed of linearly polarized light parallel to the polarization axis of the display device 20. The display light emitted from the display device 20 transmits through the alignment control device 30. The light component transmitted through the alignment control device 30 is transmitted through the optical device 40, reflected in the Z direction, and incident on the polarizing device 50. The polarization axis of the display device 20 and the polarization axis of the polarizing device 50 are set to be parallel to each other. The light component entering the polarizing device 50 is transmitted through the polarizing device 50 with substantially no decrease in light intensity. The light component transmitted through the polarizing device 50 is output from the aerial display apparatus 1 toward the viewer.

It is assumed that the transmittance of the polarizing device 50 for linearly polarized light parallel to the polarization axis of the polarizing device 50 is 100%. In this case, the transmittance of the display light emitted from the display device 20 is 100% in principle.

(3) Effects of Embodiment

According to the embodiment of the present invention, the light emitted from the display device 20 is reflected on the optical device 40, and thus an aerial image can be displayed in an aerial space. Moreover, it is possible to display an aerial image in the front direction of the aerial display apparatus 1.

The external light incident on the aerial display apparatus 1 and reflected on the housing 60 is transmitted through the polarizing device 50 twice. This can reduce the intensity of the external light emitted from the aerial display apparatus 1. That is, it is possible to reduce an unnecessary light component not contributing to the display of the aerial image.

The housing 60 is formed of black resin, and the inner surface of the housing 60 is roughened. Thus, the light component diffused and reflected on the housing 60 can be reduced. This can reduce the intensity of the external light emitted from the aerial display apparatus 1.

Moreover, part of the external light that has been transmitted through the polarizing device 50 is absorbed by the light shielding members 34 of the alignment control device 30. That is, it is possible to prevent part of the external light incident on the alignment control device 30 from being reflected toward the viewer. This can improve a display quality of the aerial display apparatus 1.

The display light emitted from the display device 20 is transmitted through the polarizing device 50 substantially as it is. Therefore, it is possible to suppress a decrease in the light intensity of the display light emitted from the display device 20. This can realize an aerial display apparatus 1 capable of improving a display quality.

In addition, the viewer 3 can visually recognize an aerial image when observing the optical device 40 in a state of both his/her eyes being parallel to or approximately parallel to the X direction (i.e., the direction of the optical elements 42 being aligned). Furthermore, an aerial image can be continuously recognized when the viewer 3 shifts the viewpoint along the Y direction in a state of both his/her eyes being parallel to or approximately parallel to the X direction. That is, it is possible to secure a viewing angle in a state of both eyes of the viewer 3 being parallel to or approximately parallel to the X direction.

In addition, a plurality of elements constituting the aerial display apparatus 1 can be arranged in parallel. This can realize an aerial display apparatus 1 that is downsized in the Z direction.

In the embodiment described above, the display device 20 and the optical device 40 are arranged in parallel. The present invention is not limited to this, and the display device 20 may be arranged obliquely with respect to the optical device 40. The angle between the display device 20 and the optical device 40 is set to be in a range of larger than 0 degrees and smaller than 45 degrees.

In the embodiment described above, the left side surface of the optical element 42 is defined as the incident surface 43, and the right side surface is defined as the reflection surface 44. The invention is not limited thereto, and the incident surface 43 and the reflection surface 44 may be configured reversely. In this case, the operation of the aerial display apparatus 1 described in the embodiment is also reversed in the horizontal direction.

In the embodiment described above, the liquid crystal display device is described as an example of the display device 20, but the display device 20 is not limited to this. As the display device 20, a self-luminous organic electroluminescence (EL) display device, a micro-light-emitting diode (microLED) display device, or the like can be used. In the microLED display device, light in red (R), green (G), and blue (B) that constitutes a pixel is respectively emitted by an LED. In a case where the self-luminous display device 20 is used, the lighting device 10 is not necessary.

The present invention is not limited to the above embodiments, and various modifications can be made without departing from the gist of the present invention at an implementation stage. In addition, the embodiments may be appropriately combined with each other, and in such a case, combined effects can be attained. Furthermore, various inventions are included in the above-described embodiments, and various inventions can be extracted by combining selected ones of the disclosed structural components. Even if some structural components are omitted from the structural components shown in the embodiment, the configuration without these structural components can be extracted as an invention if the problem can be solved and the effects can be attained.

REFERENCE SIGNS LIST

| | |
|---|---|
| 1 | Aerial display apparatus |
| 2 | Aerial image |
| 3 | Viewer |
| 10 | Lighting device |
| 11 | Light source unit |
| 12 | Light guide plate |
| 13 | Reflective sheet |
| 20 | Display device |
| 20A | Liquid crystal panel |
| 20B, 20C | Polarizing plate |
| 30 | Alignment control device |
| 31, 32 | Base member |
| 33 | Transparent member |
| 34 | Light shielding member |
| 40 | Optical device |
| 41 | Base member |
| 42 | Optical element |
| 43 | Incident surface |
| 44 | Reflection surface |
| 50 | Polarizing device |
| 60 | Housing |
| 60A | Opening |
| 60B | Stepped portion |
| 70 | Control unit |
| 70A | Display processing unit |
| 70B | Information processing unit |
| 71 | Storage unit |
| 72 | Input/output interface |
| 73 | Display unit |
| 74 | Input unit |
| 75 | Bus |

**Claims**

1. An aerial display apparatus comprising:

   a display device configured to display an image;
   an optical device arranged to receive light from the display device and configured to reflect light from the display device to a side opposite to the display device to form an aerial image in an aerial space;
   a polarizing device arranged to receive light from the optical device and configured to transmit linearly polarized light; and
   a housing formed to surround the optical device and configured to fix the display device and the optical device with a space therebetween,
   a polarization axis of the polarizing device being parallel to a polarization axis of the display device.

2. The aerial display apparatus according to claim 1, wherein

   the housing includes a bottom plate having an opening, and
   the display device is arranged such that the light from the display device passes through the opening.

3. The aerial display apparatus according to claim 1, wherein

   the optical device includes a planar base member, and a plurality of optical elements provided below the base member, each extending in a first direction and aligned in a second direction orthogonal to the first direction, and
   each of the optical elements has an incident surface and a reflection surface which are inclined with respect to a normal direction of the base member and are in contact with each other.

4. The aerial display apparatus according to claim 1, wherein

the display device, the optical device and the polarizing device are arranged in parallel to each other.

5. The aerial display apparatus according to claim 1, further comprising:
an alignment control device arranged between the display device and the optical device and transmitting part of the light from the display device.

6. The aerial display apparatus according to claim 5, wherein

   the alignment control device includes a plurality of transparent members and a plurality of light shielding members alternately arranged, and
   the light shielding members are inclined with respect to a normal direction of the alignment control device.

7. The aerial display apparatus according to claim 5, wherein
the display device and the alignment control device are arranged in parallel to each other.

8. The aerial display apparatus according to claim 1, further comprising:

   a lighting device configured to produce light,
   wherein the display device is arranged to receive light from the lighting device and is configured by a liquid crystal display device.

F I G. 1

FIG. 2

60

40,50

Y

X

FIG. 3

EP 4 492 127 A1

F I G. 4

F I G. 5

EP 4 492 127 A1

Enlarged view
of surface

60B

60

60A

Z

X

F I G . 6

F I G. 7A

F I G. 7B

F I G. 8

EP 4 492 127 A1

F I G. 9

F I G. 10

F I G. 11

F I G. 12

F I G. 13

EP 4 492 127 A1

External light

Polarization axis

Polarization axis

50

40

60

10

11

12 13 20 30

Z

Y

X

F I G. 14

A

B

FIG.15

## INTERNATIONAL SEARCH REPORT

| International application No. |
|---|
| **PCT/JP2023/005799** |

### A. CLASSIFICATION OF SUBJECT MATTER

*G02B 30/56*(2020.01)i; *G02B 5/00*(2006.01)i; *G02B 5/04*(2006.01)i; *H04N 13/302*(2018.01)i
FI: G02B30/56; G02B5/00 Z; G02B5/04 A; H04N13/302

According to International Patent Classification (IPC) or to both national classification and IPC

### B. FIELDS SEARCHED

Minimum documentation searched (classification system followed by classification symbols)

G02B30/56; G02B5/00; G02B5/04; G02B5/08; H04N13/00-13/398; G03B35/00-35/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2012/165217 A1 (SHARP KK) 06 December 2012 (2012-12-06) paragraphs [0025]-[0038], fig. 1-2, 5 | 1, 4-8 |
| A | paragraphs [0025]-[0038], fig. 1-2, 5 | 2-3 |
| Y | JP 2014-010161 A (NITTO DENKO CORP.) 20 January 2014 (2014-01-20) paragraphs [0013]-[0042], fig. 1 | 1, 4-8 |
| Y | JP 10-123974 A (IDEC IZUMI CORP.) 15 May 1998 (1998-05-15) paragraphs [0038]-[0113], fig. 1-9 | 1, 4-8 |
| Y | JP 2019-105726 A (KONICA MINOLTA, INC.) 27 June 2019 (2019-06-27) paragraphs [0040]-[0110], fig. 6, 22 | 4-8 |
| Y | WO 2021/177271 A1 (TOPPAN INC.) 10 September 2021 (2021-09-10) paragraphs [0009]-[0058], fig. 1-9 | 1, 4-8 |
| A | paragraphs [0009]-[0058], fig. 1-9 | 2-3 |
| Y | WO 2019/240137 A1 (TOPPAN INC.) 19 December 2019 (2019-12-19) paragraphs [0027]-[0087], fig. 17-35 | 4-8 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2023** | **11 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
| --- | --- |
| | **PCT/JP2023/005799** |

### C. DOCUMENTS CONSIDERED TO BE RELEVANT

| Category* | Citation of document, with indication, where appropriate, of the relevant passages | Relevant to claim No. |
| --- | --- | --- |
| Y | JP 2019-101055 A (KONICA MINOLTA, INC.) 24 June 2019 (2019-06-24) paragraphs [0027]-[0104], fig. 1, 4, 9, 15, 18, 22 | 4-8 |
| A | US 2017/0236491 A1 (FOSTER, N. A. and MARDON, G. S.) 17 August 2017 (2017-08-17) entire text, all drawings | 1-8 |

Form PCT/ISA/210 (second sheet) (January 2015)

INTERNATIONAL SEARCH REPORT
Information on patent family members

International application No.

**PCT/JP2023/005799**

| Patent document cited in search report | | | Publication date (day/month/year) | Patent family member(s) | | | Publication date (day/month/year) |
|---|---|---|---|---|---|---|---|
| WO | 2012/165217 | A1 | 06 December 2012 | (Family: none) | | | |
| JP | 2014-010161 | A | 20 January 2014 | (Family: none) | | | |
| JP | 10-123974 | A | 15 May 1998 | (Family: none) | | | |
| JP | 2019-105726 | A | 27 June 2019 | (Family: none) | | | |
| WO | 2021/177271 | A1 | 10 September 2021 | CN | 115280222 | A | |
| | | | | TW | 202138882 | A | |
| WO | 2019/240137 | A1 | 19 December 2019 | US | 2021/0096393 | A1 | |
| | | | | paragraphs [0064]-[0130], fig. 17-35 | | | |
| | | | | EP | 3809189 | A1 | |
| | | | | CN | 112352171 | A | |
| | | | | TW | 202004265 | A | |
| JP | 2019-101055 | A | 24 June 2019 | (Family: none) | | | |
| US | 2017/0236491 | A1 | 17 August 2017 | WO | 2016/189413 | A1 | |
| | | | | CA | 2956890 | A1 | |

Form PCT/ISA/210 (patent family annex) (January 2015)

## EP 4 492 127 A1

**Patent documents cited in the description**

- JP 2011191404 A

- JP 2011175297 A